# EUROPÄISCHE PATENTSCHRIFT

(11) **EP 2 138 381 B1**
(45) Veröffentlichungstag und Bekanntmachung des Hinweises auf die Patenterteilung: **10.11.2010**
(21) Anmeldenummer: 09005966.8
(22) Anmeldetag: 30.04.2009
(51) Int. Cl.: B62D 21/02

(54) **Frontquerträger eines Nutzfahrzeugs**
Front cross-member of a commercial vehicle
Support transversal frontal d'un véhicule utilitaire

(30) Priorität: 26.06.2008 DE 102008030450
(43) Veröffentlichungstag der Anmeldung: 30.12.2009
(73) Patentinhaber: MAN Nutzfahrzeuge Aktiengesellschaft, 80995 München (DE)
(72) Erfinder: Ertelt, Christoph, 81543 München (DE); Übelacker, Andreas, 82281 Egenhofen (DE)

(56) Entgegenhaltungen:
- EP-A- 1 153 821
- EP-A- 1 266 818
- EP-A- 1 754 652
- DE-A1-102004 038 487

## Beschreibung

Die Erfindung betrifft einen Fahrgestellrahmen eines Nutzfahrzeugs nach den im Oberbegriff des Anspruchs 1 angegebenen Merkmalen.

Die Werkstoffe der Motorbauteile und das Schmieröl im Motor verfügen nur über eine begrenzte Hrtzebeständigkeit. Die Wärme, die durch den Verbrennungsvorgang an die Bauteile des Motors übergegangen ist, muss an die Außenluft abgeführt werden. Dazu muss der Motor gekühlt werden. Für eine hohe Kühlwirkung des Kühlsystems ist es deshalb wichtig, die Wärmeübertragung durch eine hohe Durchflussgeschwindigkeit des Kühlmittels sowie maximale Berührungsflächen zu optimieren. Im modernen Nutzfahrzeugbau werden vorzugsweise wassergekühlte Motoren verwendet, deren Zylinder und Zylinderköpfe doppelwandig gebaut sind. Zwischen den Wänden befindet sich Wasser bzw. Kühlflüssigkeit. Lüfter, Kühler und die erforderliche Wasserpumpe sind dabei die wichtigsten Bauteile des Wasserkühlsystems. Ventilatoren oder Lüfter versorgen dabei alle zu kühlenden Motorteile und vor allem den von der Kühlflüssigkeit durchströmten Kühler ausreichend mit Luft. Die Wärmeübertragung zwischen den Teilen des Motors und dem Kühler steigt durch Erhöhung der Strömungsgeschwindigkeit und Vergrößerung der Kontaktflächen des Kühlers. Kühler bestehen dabei aus einem Röhren- oder Lamellensystem, um die Kontaktflächen möglichst groß zu gestalten.

Aus der AT 502802 B1 ist ein Querträgerverbund für ein luftgefedertes Nutzfahrzeug bekannt, das über zwei in Längsrichtung verlaufende Rahmenlängsträger verfügt. Der Querträgerverbund weist zwei jeweils an den Außenseiten der Rahmenlängsträger befestigte Luftfederhalter sowie ein unterhalb der Rahmenlängsträger und annähernd in Querrichtung zu den Rahmenlängsträgern verlaufendes Verbindungselement auf. Das Verbindungselement verbindet die beiden Luftfederhalter miteinander, wobei das Verbindungselement ein Mittelteil und zwei jeweils an gegenüberliegenden Enden des Mittelteils befestigte Brückenteile aufweist. Die Brückenteile sind in einem, dem Mittelteil abgewandten Bereich an den Luftfederhaltern befestigt. Der Querträgerverbund zeichnet sich dadurch aus, dass die Brückenteile zusätzlich jeweils am Untergurt der Rahmenlängsträger befestigt sind. Die technische Entwicklung im Nutzfahrzeugbau führt dazu, dass die Nutzfahrzeuge mit immer leistungsfähigeren Motoren ausgerüstet werden, die eine erhöhte Kühlungsleistung erfordern. Nachteilig ist dabei jedoch, dass der erforderliche Kühler im Vorderwagen des Nutzfahrzeugs durch die baulichen Gegebenheiten der beiden Rahmenlängsträger sowie des vordersten Querträgers beeinträchtig ist.

Aus der DE 10 2004 038 487 A1 ist ein Fahrgestell für ein Nutzfahrzeug bekannt, das einen Fahrzeugrahmen aufweist, der wenigstens zwei voneinander beabstandete und über mehrere Querträger miteinander verbundene Rahmenlängsträger besitzt. Das Fahrgestell verfügt über ein an vorderen Enden der Rahmenlängsträger befestigbares Frontmodul, das wenigstens zwei voneinander beabstandete Längsträger aufweist, die wenigstens eine Querverbindung besitzen und an denen eine Vorderachsaufhängung des Nutzfahrzeugs angeordnet ist. Das Frontmodul ist mit einer darin befestigten Antriebsmaschine und einem damit verbundenen Getriebe und/oder weiteren Peripheriekomponenten vormontiert.

Die EP 1 153 821 A1 offenbart eine Verkleidung am Frontend des Fahrgestells eines Nutzfahrzeugs, bei dem der Hitzeabstrahler einer Kontrolleinheit dem Luftstrom ausgesetzt ist, der durch die Innenseite eines Ansaugweges strömt. Der Ansaugweg verläuft in einem Verkleidungsteil, wobei eine Steuereinheit durch die Luft abgekühlt werden kann und die Luft gegenüber der Temperatur nach Durchquerung des Kondensators und eines Kühlers um etwa 35° heruntergekühlt wird. Da der Kühleffekt erhöht wird, kann die Größe des Kühlers vermindert werden. Die Struktur der Steuereinheit kann vereinfacht werden, wodurch die Herstellungskosten der Steuereinheit verringert werden können.

Aus der EP 1 26 6 818 A2 ist ein Modulträger bekannt, der zusätzliche Komponenten eines Kühlungssystems umfasst. Der Modulträger weist eine Rahmenstruktur auf, mit je einem oberen und einem unteren, quer zur Fahrtrichtung verlaufenden Element, wobei die beiden Elemente die Rahmenlängsträger verbinden. Die verbindenden Elemente werden mit je einem Multifunktionsträger am zugehörigen Längsträger befestigt und ragen jeweils senkrecht zu den Rahmenlängsträgern nach oben und unten aus der durch die Rahmenlängsträger verlaufenden Ebene heraus.

Gattungsbildend ist die EP 1 754 652 A1, aus der ein Fahrzeugrahmen für ein Nutzfahrzeug bekannt ist. Der Fahrzeugrahmen weist zwei Rahmenlängsträger auf, welche verteilt über die Fahrzeuglänge, über Querträger mehrfach miteinander verbunden sind, wobei die Frontbereiche der beiden Rahmenlängsträger mit einem Frontquerträger miteinander verbunden sind. Der Frontquerträger ist über Verbindungskörper an den Enden der Rahmenlängsträger angebunden und ist als modulares und eine Mehrzahl von Konstruktionselementen aufweisendes Schweißgerippe aufgebaut. Der Frontquerträger ist weiterhin als rahmenförmige, multifunktionale Trägereinheit zur Aufnahme von zumindest einem Kühlmodul ausgebildet. Es wird ein Fahrzeugrahmen für ein Nutzfahrzeug geschaffen, welcher einen multifunktionalen Frontquerträger aufweist, der eine bauraumminimale Integration zumindest eines Kühlmoduls in den Vorderwagen eines Nutzfahrzeugs ermöglicht und einen einfachen und kostengünstigen Aufbau aufweist.

Es ist daher die Aufgabe der Erfindung, ein Fahrgestell eines Nutzfahrzeugs zu schaffen, bei dem die Dimensionierung des Lüfters von der Anordnung der Rahmenlängsträger sowie des vordersten Querträgers weitgehend unbeeinflusst bleibt.

Die Aufgabe wird durch die Merkmale des kennzeichnenden Teils des Anspruchs 1 gelöst.

Der Durchbruch im Bereich des vordersten Frontquerträgers zwischen einer oberen und einer unteren Hälfte des Frontendquerträgers ermöglicht die Vergrößerung des Lüfters in horizontaler und vertikaler Richtung unabhängig von der Lage des Frontendquerträgers. Der Durchbruch wird dabei in Fahrtrichtung gesehen nach oben und unten von der oberen und der unteren Hälfte des Frontendquerträgers begrenzt sowie seitlich nach rechts und nach links durch die Rahmenlängsträger bzw. die Multifunktionslagerschilde. Im Durchbruch ist in Fahrtrichtung gesehen hinter dem Kühler ein Lüfter angeordnet, der in einer Zarge gehalten ist und den Durchbruch stabilisiert. Es ist gleichfalls denkbar, dass der Kühler, der in den Durchbruch eingepasst ist, in dem erfindungsgemäßen Frontendquerträger ein tragendes Element darstellt. Da der Frontendquerträger den Lüfter der Wasserkühlung des Nutzfahrzeugs aufnimmt, kann dieser deutlich vergrößert werden und gegenüber der Fahrzeuglängsachse zentrisch oder außerzentrisch angeordnet sein. Der Frontendquerträger versteift zusätzlich die Rahmenlängsträger im Bereich des Vorderwagens. Der Frontendquerträger kann dabei z. B. als Pressteil-Schweißverbund mit einem U-förmigen Pressteil zur Aufnahme der Quer- und Vertikalkräfte oder als Gussteile zur Aufnahme Lagerung und Abstützung der Längskräfte ausgebildet sein. Die untere Hälfte des Frontendquerträgers kann rechtwinklig zur Fahrzeuglängsachse als Frontunterfahrschutz ausgebildet sein und unterhalb des Kühlers positioniert sein. Im Falle eines Frontalunfalls soll der Unterfahrschutz die Aufprallenergie aufnehmen und sie durch seine Verformung in den Rahmenlängsträger einleiten. Denkbar ist, dass an dem Steg oder an dem Unterfahrschutz der Kippzylinder des Fahrerhauses angeordnet ist, wodurch die Verbindung zum Fahrerhaus hergestellt wird. Je nach erforderlicher Ausrichtung des Kühlers kann die untere Hälfte des Frontendquerträgers entweder vertikal unter der oberen Hälfte des Frontendquerträgers angeordnet sein, oder aber in oder entgegen der Fahrtrichtung angestellt sein.

Nach einer anderen Ausführungsform der Erfindung sind von der Fahrzeuglängsachse aus gesehen, an der Außenseite der Längsträger Multifunktionslagerschilde angeordnet, die der mittelbaren Befestigung der oberen und unteren Hälften des Frontendquerträgers an den Längsträgern dienen. Die Multifunktionslagerschilde sind dabei horizontal vom Rahmenlängsträger abragend angeordnet und zwar in Bezug zur Fahrzeuglängsachse gesehen an der Außenseite des Längsträgers. Der Multifunktionslagerschild kann dabei mit dem Längsträger verschweißt oder verschraubt sein. Zusätzlich ist vorstellbar, dass der Multifunktionslagerschild mit der oberen- und der unteren Hälfte des Frontendquerträgers als einteiliges Bauteil konstruiert ist.

Nach einer weiteren Ausführungsform der Erfindung bildet die Verbindung aus Multifunktionslagerschilden und oberen und unteren Frontendquerträgerhälften einen ringförmigen Rahmen. Zusätzlich kann der Rahmen eine mehreckige Form aufweisen. Der Rahmen umschließt den Durchbruch mit der oberen und der unteren Hälfte des Frontendquerträgers und seitlich dazu mit den Rahmenlängsträgern bzw. den Lagerböcken. Durch die Ringform des Rahmens wirkt die vom Fahrerhaus auf den Frontendquerträger einwirkende Kraft in den Rahmenlängsträger ein. Der ringförmige Frontendquerträger ist je nach Schwere des Lastkraftwagens zum Beispiel als Gussteil oder in einer anderen Herstellungsform ausgebildet. Der Rahmen ist dabei in seiner Ausdehnung den räumlichen Gegebenheiten des Lüfters angepasst.

Nach einer weiteren Ausführungsform der Erfindung ist in den Rahmen des Frontendquerträgers eine Kühlerzarge zur Aufnahme des Lüfters eingesetzt. An der Kühlerzarge können Aussparungen für die Lenkhebelhüllkurven des Lenkgetriebes vorgesehen sein.

Nach einer weiteren Ausführungsform der Erfindung weist die obere Hälfte des Frontendquerträgers Aufnahmevorrichtungen für die Anbindung der Fahrerhauslagerung auf. Die Anbindung der Fahrerhauslagerung ist durch radial zur oberen Hälfte des Frontendquerträgers verlaufende Streben von dieser nach außen beabstandet Zusätzlich sind Streben vorgesehen, die den Frontendquerträger in Längsrichtung der Rahmenlängsträger gegen diese abstützt. Die Streben verbinden dabei relativ zur Fahrzeuglängsachse gesehen die Anbindungen der Fahrerhauslagerung mit den Längsträgern. Zur weiteren Abstützung und Dämpfung des Fahrerhauses sind zwischen den Streben und dem Unterfahrschutz weitere Federbeine vorgesehen.

Denkbar ist auch, dass an dem Multifunktionslagerbock ein weiterer Lagerbock z. B. ein Abschleppbock angeordnet ist. Der Multifunktionslagerbock kann dabei in Bezug zur Fahrzeuglängsachse seitlich und nach vorne vom jeweiligen Rahmenlängsträger abstehen. Der Multifunktionslagerschild kann an nur einem Längsträger oder auch an beiden Längsträgern diametral gegenüberliegend angebracht sein. An dem Längsträger, an dem kein Multifunktionslagerschild vorgesehen ist, sind obere Hälften und untere Hälften des Frontendquerträgers direkt an Rahmenlängsträger befestigt. Zusätzlich ist denkbar, dass der Multifunktionslagerschild ein Lenkgetriebe umfasst. Der vom Längsträger in Fahrzeuglängsrichtung gesehen, seitlich und nach vorne abragende Multifunktionslagerschild ermöglicht es, Kühler anzuordnen, die in ihrer seitlichen Ausdehnung über die lichte Weite der Rahmenlängsträger hinausragen. Das Lenkgetriebe kann so angeordnet sein, dass es mittragend in den Multifunktionslagerschild integriert ist. Durch eine symmetrische Gestaltung des Lenkgetriebegehäuses sowie des Abschleppbockes ist die erfindungsgemäße Tragstruktur sowohl für Links- als auch für Rechtslenker-Fahrzeuge einsetzbar.

Weitere Merkmale, Einzelheiten und Vorteile der Erfindung ergeben sich aus der folgenden Beschreibung verschiedener Ausführungsformen der Erfindung sowie anhand der Zeichnung. Hierbei zeigen:
- Fig. 1: in perspektivischer Darstellung der Frontendquerträger und
- Fig. 2: der Frontendquerträger in Frontansicht.

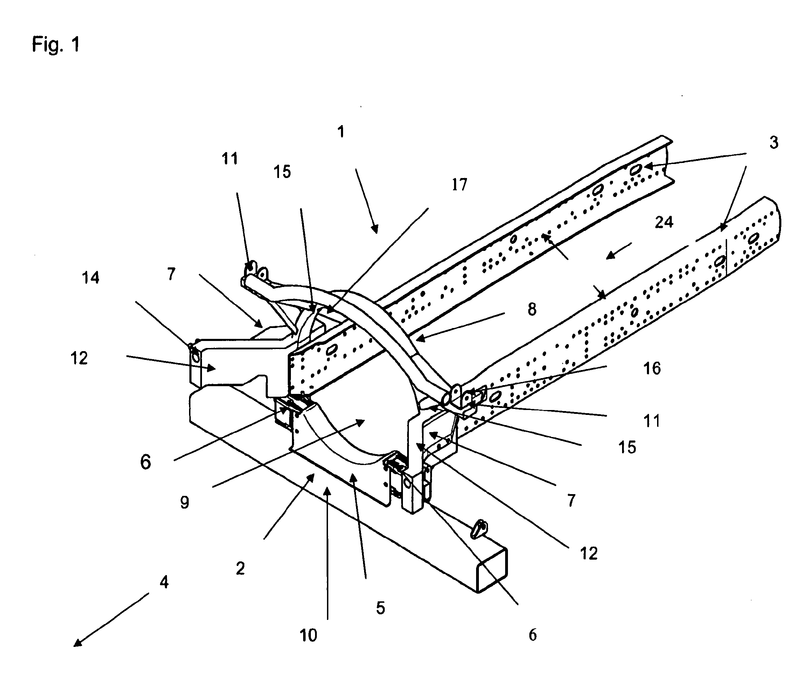

Fig. 1 zeigt den Vorderwagen 1 eines Nutzfahrzeugs mit einem Frontendquerträger 2, der im vorderen Bereich die beiden Längsträger 3 seitlich umfasst. Im Beispiel der Fig. 1 befindet sich der Frontendquerträger 2 in Fahrtrichtung 4 gesehen am vorderen Ende der Längsträger 3. Der Frontendquerträger 2 weist dabei eine untere Hälfte 5 auf, die über Zwischenstücke 6 mit einem Multifunktionslagerschild 7 verbunden ist. Im Beispiel der Fig. 1 sind zwei Multifunktionslagerschilde 7 dargestellt, die in Fahrtrichtung 4 gesehen an ihren oberen Enden einstückig mit der oberen Hälfte 8 des Frontendquerträgers 2 verbunden sind. In der Fig. 1 ist der Frontendquerträger 2 ringförmig ausgebildet und umschließt einen Durchbruch 9.

Die untere Hälfte 5 des Frontendquerträgers 2 ist als Hohlprofil ausgebildet und umfasst einen Unterfahrschutz 10. An den beiden äußeren Enden des Unterfahrschutzes 10 sind die Lager 11 für die Halterung der Kippzylinder (nicht dargestellt) angeordnet. Die Zwischenstücke 6 sind jeweils einen Endes kraft- und/oder formschlüssig mit der unteren Hälfte 5 des Frontendquerträgers 2 verbunden und anderen Endes mit je einem Multifunktionslagerschild 7. Die Arme 12 der Multifunktionslagerschilde 7 ragen relativ zur Fahrzeuglängsachse 24 gesehen seitlich und nach vorne vom Rahmenlängsträger 3 ab, sodass zwischen den Armen 12 ein Kühler (nicht gezeigt), angeordnet werden kann, der in seiner horizontalen Ausdehnung über die lichte Weite 13 der Längsträger 3 hinausgeht. An dem Arm 12 des Multifunktionstagerschilds 7 ist eine Abschieppvorrichtung 14 angeordnet, in die z. B. eine Abschleppöse eingreifen kann. Etwa quer zur Fahrtrichtung 4 sind an der oberen Hälfte 8 des Frontendquerträgers 2 zu beiden Seiten der Längsträger 3 Streben 15 erkennbar, die etwa horizontal verlaufen und Aufnahmevorrichtungen 16 aufweisen, die die Anbindung der Fahrerhauslagerung ermöglichen. Die rückwärtigen Streben 17 stützen den Frontendquerträger 2 entgegen der Fahrtrichtung 4 gegen die Längsträger 3 ab.

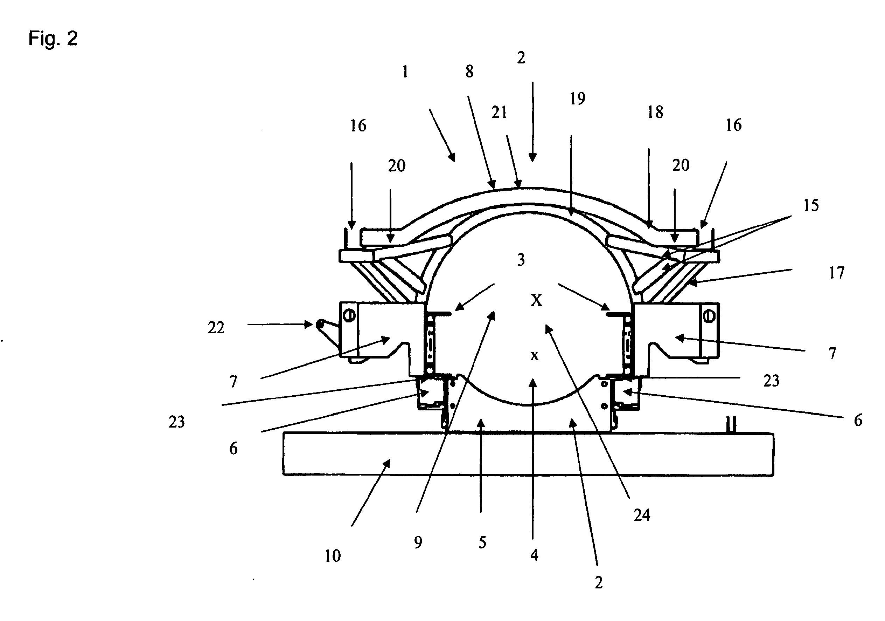

Fig. 2 zeigt die Frontansicht des Vorderwagens 1 mit dem Frontendquerträger 2 und den Längsträgern 3 sowie der unteren Hälfte 5 des Frontendquerträgers 2, der an seiner Unterseite einen Unterfahrschutz 10 aufweist. Oberhalb der Längsträger 3 ist die Fachwerkstruktur 18 des Frontendquerträgers 2 erkennbar, die dessen obere Hälfte 8 und die Streben 15 und 17 umfasst. Die obere Hälfte 8 des Frontendquerträgers 2 wird dabei von einem Stützbogen 19 abgestützt, an dem seitlich und nach außen die Streben 15 verlaufen. In Fahrtrichtung 4 gesehen am äußeren Ende der Streben 15 greift je eine rückwärtige Strebe 17 an, die der Abstützung des Frontendquerträger 2 gegen den Längsträger 3 dient. An den äußeren Enden der Streben 15 sind gleichfalls die Aufnahmevorrichtungen 16 für die Anbindung der Fahrerhauslagerung (nicht gezeigt) erkennbar. Der Stützbogen 19 hat in der Fig. 2 die Form eines Halbkreises, der relativ zur Fahrzeuglängsachse 24 außerhalb der Längsträger 3 auf den Multifunktionslagerschilden 7 aufsitzt. Die obere Hälfte 8 weist in Bezug zur Fahrtrichtung 4 zwei äußere Enden 20 auf, die etwa achsparallel zum Unterfahrschutz 10 verlaufen. Zwischen den beiden äußeren Enden 20 der oberen Hälfte 8 ist ein bogenförmiger Mittelteil 21 der Brücke 8 zu erkennen, der kraftschlüssig und/oder stoffschlüssig mit dem Stützbogen 19 verbunden ist. Der Durchbruch 9 wird an seinem Umfang von dem Stützbogen 19 der oberen Hälfte 8 des Frontendquerträgers 2 sowie seitlich von den Längsträgern 3 und/oder den Multifunktionslagerschilden 7 und unten von der unteren Hälfte 5 des Frontendquerträgers 2 eingefasst. Seitlich außen an den Längsträgern 3 sitzen die Multifunktionslagerschilde 7 an, die die Verbindung zwischen dem Frontendquerträger 2 und dessen oberer Hälfte 5 herstellen. Die Multifunktionslagerschilde 7 ragen von den Längsträgern 3 seitlich und in Fahrtrichtung 4 gesehen nach vorne ab. An dem in Fahrtrichtung 4 gesehen rechten Multifunktionslagerschild 7 ist ein Abschleppbock 22 dargestellt. Die Zwischenstücke 6 sind an den Unterseiten der Multifunktionslagerschilde 7 und/oder der Unterkanten 23 der Längsträger 3 angeordnet und greifen in die untere Hälfte 5 des Frontendquerträgers 2 ein.

### Bezugsziffern

- 1: Vorderwagen
- 2: Frontendquerträger
- 3: Längsträger
- 4: Fahrtrichtung
- 5: Untere Hälfte
- 6: Zwischenstück
- 7: Multifunktionslagerschild
- 8: Obere Hälfte
- 9: Durchbruch
- 10: Unterfahrschutz
- 11: Lagerkippzylinder
- 12: Arm des Multifunktionslagerschilds
- 13: lichte Weite
- 14: Abschleppvorrichtung
- 15: Streben
- 16: Aufnahmevorrichtung
- 17: rückwärtige Streben
- 18: Fachwerkstruktur
- 19: Stützbogen
- 20: äußere Enden der Brücke
- 21: Mittelteil der Brücke
- 22: Abschleppbock
- 23: Unterkante des Längsträgers
- 24: Fahrzeuglängsachse

## Patentansprüche

1. Fahrgestellrahmen eines Nutzfahrzeugs mit einem Lüfter und mit einem der Verbindung der beiden Längsträger (3) dienenden Frontendquerträger (2), der horizontal in eine obere und eine untere Hälfte (8; 5) unterteilt ist, wobei zwischen den Hälften (8; 5) ein Durchbruch (9) vorgesehen ist und die Hälften (8: 5) des Frontendquerträgers (2) zumindest mittelbar an den Längsträgern (3) befestigt sind und zumindest partiell einen Lüfter einer Motorkühlanlage umgreifen, **dadurch gekennzeichnet, dass** der Durchbruch (9) unabhängig von der Lage des Frontendquerträgers (2) eine Vergrößerung des Lüfters in horizontaler und vertikaler Richtung ermöglicht, wobei der Lüfter in seiner horizontalen Ausdehnung über eine lichte Weite (13) der Längsträger (3) hinausgeht.

2. Fahrgestellrahmen eines Nutzfahrzeugs nach Anspruch 1, **dadurch gekennzeichnet, dass** von der Fahrzeuglängsachse (24) aus gesehen, an der Außenseite der Längsträger (3) Multifunktionslagerschilde (7) angeordnet sind, die der mittelbaren Befestigung der oberen und unteren Hälften (8;5) des Frontendquerträgers (2) an den Längsträgern (3) dienen.

3. Fahrgestellrahmen eines Nutzfahrzeugs nach Anspruch 2, **dadurch gekennzeichnet, dass** die Verbindung aus Multifunktionslagerschilden (7) und oberen und unteren Frontendquerträgerhälften (8; 5) einen ringförmigen Rahmen bildet.

4. Tragstruktur nach Anspruch 2, **dadurch gekennzeichnet, dass** die Verbindung aus Multifurtktionslagerschilden (7) und oberen und unteren Frontendquerträgerhälften (8; 5) einen Rahmen bildet, der eine mehreckige Form aufweist.

5. Tragstruktur nach einem oder mehreren der Ansprüche 3 und 4, **dadurch gekennzeichnet, dass** in den Rahmen eine Kühlerzarge zur Aufnahme des Lüfters aufgenommen ist.

6. Fahrgestellrahmen eines Nutzfahrzeugs nach Anspruch 1, **dadurch gekennzeichnet, dass** die obere Hälfte (8) des Frontendquerträgers (2) Aufnahmevorrichtungen (16) für die Anbindung der Fahrerhauslagerung aufweist.

7. Tragstruktur nach Anspruch 6, **dadurch gekennzeichnet, dass** die Anbindung durch Streben (15) von der oberen Hälfte (8) des Frontendquerträgers (2) nach außen beabstandet ist.

8. Tragstruktur nach Anspruch 7, **dadurch gekennzeichnet, dass** die Streben (15) in Längsrichtung der Längsträger (3) gegen diese (3) abgestützt sind.

9. Tragstruktur nach Anspruch 8, **dadurch gekennzeichnet, dass** am Multifunktionslagerschild (7) ein Abschleppbock (22) angeordnet ist.

## Claims

1. Chassis of a commercial vehicle with a fan and with a front cross member (2) acting as the connection between the two side members (3), which front cross member is subdivided horizontally into an upper and a lower half (8; 5), whereby an opening (9) is provided between the two halves (8; 5) and the two halves (8; 5) of the front cross member (2) are fastened at least indirectly to the side members (3) and at least partially (fan) enclose an engine cooling system, **characterised in that** the opening (9) permits an enlargement of the fan in a horizontal and vertical direction independently of the position of the front cross member (2), whereby the horizontal extension of the fan extends beyond the side members (3) by a clear width (13).

2. Chassis of a commercial vehicle in accordance with claim 1, **characterised in that** multifunctional bearing plates (7) are arranged on the outer side of the side members (3) as seen from the longitudinal axle (24) of the vehicle, which bearing plates aid the indirect fastening of the upper and lower halves (8; 5) of the front cross member (2) to the side members (3).

3. Chassis of a commercial vehicle in accordance with claim 2, **characterised in that** the connection between the multifunctional bearing plates (7) and the upper and lower halves of the front cross members (8; 5) forms a ring-shaped frame.

4. Load-bearing structure in accordance with claim 2, **characterised in that** the connection between the multifunctional bearing plates (7) and the upper and lower halves of the front cross members (8; 5) forms a frame with a polygonal shape.

5. Load-bearing structure in accordance with one or several of the claims 3 and 4, **characterised in that** a fan shroud is fitted in the frame to accommodate the fan.

6. Chassis of a commercial vehicle in accordance with claim 1, **characterised in that** the upper half (8) of the front cross member (2) is provided with an equipment holder (16) for connection of the cab mount.

7. Load-bearing structure in accordance with claim 6, **characterised in that** the connection is distanced outwards from the upper half (8) of the front cross member (2) by struts (15).

8. Load-bearing structure in accordance with claim 7, **characterised in** the struts (15) are supported against the side members (3) along the longitudinal axis of the side members (3).

9. Load-bearing structure in accordance with claim 8, **characterised in that** a towing mount (22) is arranged on the multifunctional bearing plate (7).

## Revendications

1. Cadre de châssis d'un véhicule industriel avec un ventilateur et avec une traverse avant (2) servant à relier les deux longerons (3), qui est subdivisée en une moitié supérieure et une moitié inférieure (8 ; 5), auquel cas un passage (9) est prévu entre les moitiés (8 ; 5) et les moitiés (8 ; 5) de la traverse avant (2) peuvent être fixées au moins indirectement sur les longerons (3) et enveloppent au moins partiellement un ventilateur d'une installation de refroidissement du moteur, **caractérisé en ce que** le passage (9) permet un agrandissement du ventilateur dans le sens horizontal et vertical indépendamment de la position de la traverse avant (2), le ventilateur dépassant dans son extension horizontale au-delà d'un écartement (13) des longerons (3).

2. Cadre de châssis d'un véhicule industriel selon la revendication 1, **caractérisé en ce que**, vu de l'axe longitudinal du véhicule (24), des flasques multifonctions (7) sont disposées sur le côté extérieur des longerons (3) et servent à fixer indirectement les moitiés supérieure et inférieure (8 ; 5) de la traverse avant (2) sur les longerons (3).

3. Cadre de châssis d'un véhicule industriel selon la revendication 2, **caractérisé en ce que** la liaison composée des flasques multifonctions (7) et des moitiés supérieure et inférieure (8 ; 5) de la traverse avant forme un cadre annulaire.

4. Structure porteuse selon la revendication 2, **caractérisée en ce que** la liaison composée de flasques multifonctions (7) et des moitiés supérieure et inférieure (8 ; 5) de la traverse avant forme un cadre qui présente une forme polygonale.

5. Structure porteuse selon une ou plusieurs des revendications 3 et 4, **caractérisée en ce qu'**un encadrement de ventilateur pour recevoir le ventilateur est réalisé dans le cadre.

6. Cadre de châssis d'un véhicule industriel selon la revendication 1, **caractérisé en ce que** la moitié supérieure (8) de la traverse avant (2) présente des dispositifs de fixation (16) pour relier la suspension de cabine.

7. Structure porteuse selon la revendication 6, **caractérisée en ce que** la liaison par entretoises (15) de la moitié supérieure (8) de la traverse avant (2) vers l'extérieur est située à une certaine distance.

8. Structure porteuse selon la revendication 7, **caractérisée en ce que** les entretoises (15) sont en appui dans le sens longitudinal des longerons (3) contre ces derniers (3).

9. Structure porteuse selon la revendication 8, **caractérisée en ce qu'**un support de remorquage (22) est disposé au niveau de la flasque multifonctions.
